# EUROPEAN PATENT SPECIFICATION

(11) **EP 2 406 307 B1**
(45) Date of publication and mention of the grant of the patent: **12.12.2012**
(21) Application number: 10704720.1
(22) Date of filing: 18.02.2010
(51) Int. Cl.: C08J 9/00, C08K 5/00

(54) **STYRENIC POLYMER COMPOSITION**
STYROLPOLYMERZUSAMMENSETZUNG
COMPOSITION DE POLYMÈRE STYRÉNIQUE

(30) Priority: 26.02.2009 US 208649 P
(43) Date of publication of application: 18.01.2012
(73) Proprietor: ICL-IP America Inc., Ardsley, NY 10502 (US)
(72) Inventor: HINI, Smadar, 85025 Metar (IL); PELED, Michael, 84847 Beer-Sheva (IL); SHIKOLSKY, Gideon, 26100 Kiryat-Motskin (IL); TITELMAN, Grigory, I., Papanui Christchurch 8053 (NZ); YAAKOV, Yoav, Bar, 85338 Lehavim (IL); ZILBERMAN, Joseph, 32983 Haifa (IL); LEVCHIK, Sergei, V., Croton-on-Hudson NY 10520 (US)
(74) Representative: van Heuvel, Margaretha
(86) International application number: PCT/US2010/024550
(87) International publication number: WO 2010/099020

(56) References cited:
- WO-A1-2006/008738
- WO-A1-2006/013554
- WO-A1-2008/027536
- US-B1- 6 579 911

## Description

### FIELD OF THE INVENTION

The present invention relates to styrenic polymer composition(s) and specifically flame retarded polystyrene or their foam composition(s).

### BACKGROUND OF THE INVENTION

Phosphorus based flame retardants (FRs) are usually not applicable in styrenic homo- and copolymers as they do not provide enough fire retardancy in order to pass specific flammability tests. The most preferred FRs for these types of polymers are brominated FRs. Aliphatic bromine containing FRs and/or low melting bromine FRs (BFRs) are more flame retardant efficient in styrenic homo- and copolymers at low loadings than are BFRs containing only aromatic bromine when fire retardancy is measured by limited oxygen index (LOI).

The amounts of flame retardant additives and synergists incorporated in polystyrene foams must be strictly controlled, since they can negatively affect the structural qualities and skin quality of the foam, reduce the strength of the foam or its insulating properties, at high levels of such additives. In non-foamed styrenic compositions the typical loading of flame retardant additives is significantly higher than in foamed compositions. Therefore flame retardants for foamed polystyrene compositions must have a high degree of efficiency, or in other words, the suitable organic compounds must release, when subjected to fire, the appropriate amount of bromine at the suitable temperature in order to prevent the foamed polystyrene resin from combustion.

Producers of flame retarded materials made of styrenic homo- and copolymers generally prefer to reduce the bromine flame retardant (BFR) loading as BFR systems often negatively affect the mechanical and visual properties of the flame retarded materials while also increasing density of the flame retarded materials.

Polymer foams have become available in a wide variety of forms, especially foam sheets, films, profiles and slabs for uses such as packaging, pipe and tubing, garment trimmings, construction and insulation. Foamed polystyrene is currently used in the insulation of freezers, coolers, trucks, railroad cars, buildings, roof decks and housing. Another application of foamed polystyrene is for the packaging of valuable goods such as electronic equipment. Polystyrene foams are also used as the core material for structural multilayered panels. There is an increasing demand, partially driven by legislation, to improve the fire retardant properties of polymers in such applications.

There have been efforts to reduce the total BFR loading in polystyrene foams while maintaining high levels of fire safety, U.S. Patent No. 6,579,911 describes a mixture of hexabromocyclodecane (HBCD) with organophosphorus based FRs, preferably triphenyl phosphate (TPP).

WO 2006/013554 discloses flame-resistant polystyrene and styrene containing polymers containing a combination of halogenated flame-retardants and phosphate-based synergists such as 4,4'biphenol bis(diphenyl phosphate) and triphenyl phosphate.

WO 2006/008738 discloses the use of pentabromobenzyl bromide as flame retardant in expanded polystyrene foams in combination with a second flame retardant additive, such as 4,4'biphenol bis(diphenyl phosphate).

WO 2008/027536 discloses the use of hydroquinone-based phosphates as flame retardants in styrenic resin compositions.

Unfortunately, however, many organophosphorus FRs such as resorcinol bis(diphenyl phosphate) (RDP) and bisphenol A bis(diphenyl phosphate) (BDP) are viscous to very viscous liquids. Liquid is difficult to handle with usual extrusion compounding equipment and in order to overcome this problem, usually complicated and costly means (e.g., viscous liquid handling systems) are needed to be able to introduce them into an extruder. This problem of handling is particularly critical when flame retardant masterbatch concentrates (MB) are prepared that contain high loadings of phosphorous FRs.

In addition some aromatic phosphates such as triphenyl phosphate (TPP), have undesirably low melting temperatures. TPP melts at 49°C. Although TPP can be fed into an extruder by using ordinary solid feeding system, TPP tends to melt in the feeding port and bridge the feeding system. This leads to inconsistent feeding during the run and also requires frequent interruption of the extrusion and cleaning of the feeding system.

Another disadvantage caused by the use of TPP is severe reduction in the thermal dimensional stability of styrenic homo- and copolymers, including expanded polystyrene foams. This property of thermal dimensional stability is an important one for many applications, such as in the building, electric and electronic and automotive industries where often objects are exposed to relatively high temperatures. A method often used to measure thermal dimensional stability is measurement of the heat distortion temperature (HDT) of the molded objects. Another method used to predict the dimensional stability is the glass transition temperature (Tg) of the flame retarded composition which can be determined by differential scanning calorimetry (DSC) analysis.

Suitable thermal stability of flame retardant additives is another crucial property in polystyrene foams, since additives of low thermal stability will limit the possibilities for processing the flame retarded material. Flame retardant additives of insufficient thermal stability will cause degradation of the polystyrene foam during processing, and this in turn will immediately cause a drop in all mechanical and insulating properties of the foam, and even corrosion of the equipment in the most severe cases.

The desire, however, for polystyrene foam products containing flame retardants which are environmentally friendly and economical and at the same time are capable of meeting or exceeding the most stringent flame retardancy standards while not involving the above problems still remains.

### SUMMARY OF THE INVENTION

It has been unexpectedly discovered that solid phosphate ester having an elevated melting point can be used in combination with brominated flame retardants in polystyrene foam materials to provide desirable flame resistance, thermal dimensional stability and other desirable physical properties. The solid phosphate esters with a melting temperature of at least 80 degrees Celsius act as a powerful flame retardant synergist of brominated flame retardants. There is a synergistic effect herein in polystyrene compositions prepared by extrusion compounding and molded by injection molding as well as in polystyrene beads prepared by suspension polymerization and compression molded.

The use of high melting point phosphate ester compounds together with the brominated flame retardant results in another clear advantage, when processing the foamed polystyrene composition. The good solubility of the high melting point phosphate ester compound in the styrenic foam results in a lowering of the melt viscosity of the polystyrene composition, and consequently the processing temperature can be lowered while the dispersion of the flame retardant mixture in the foam is kept optimal and the density of the foam is kept low even at lowered processing temperature.

The present invention relates to a styrenic polymer composition comprising a styrenic polymer and a flame retardant effective amount of a mixture comprising (a) at least one brominated flame retardant; and, (b) at least one solid phosphate ester of the general formula (I): 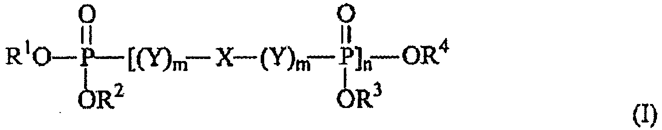 wherein each of R¹, R², R³ and R⁴ are phenyl, X is a divalent phenylene group such that the phosphate ester is a hydroquinone biphosphate, n has an average value of from 1.0 to 2.0, and m is 0.

### DETAILED DESCRIPTION OF THE INVENTION

In one aspect, therefore, the present invention provides a fire retarded polystyrene foam composition in which the flame retardant mixture comprises at least one brominated flame retardant, e.g., an aromatic polybrominated bromomethyl compounds of the general formula (I), such as pentabromobenzyl bromide (PBBBr) otherwise known as benzene pentabromo-(bromomethyl), CAS [38521-51-6], FR-706 (supplied by ICL-IP), and at least one solid phosphate ester. In one non-limiting embodiment the styrenic polymer is styrene homopolymer, i.e., crystal polystyrene, preferably crystal polystyrene, more preferably crystal polystyrene in the form of polystyrene foam

In one embodiment herein the styrenic polymer is a polystyrene foam, preferably a molded polystyrene foam or an extrusion compounded polystyrene foam, or an extruded polystyrene foam. The polystyrene foam can be formed by molding or extrusion or in any way that is commonly known in the art. Specifically some examples of such polystyrene foam can comprise aliphatic bromine flame retardant or aliphatic-aromatic bromine flame retardant.

The styrenic polymer herein or the brominated flame retardant herein can comprise any of polystyrene foams or brominated compounds, respectively, described in any of U.S. Patent No. 6,579,911, WO 2004/094517, WO 2008/127753, WO 2008127753, EP 1724304 A1, WO 2007/019120 and WO 2008/121135.

In another embodiment of this invention the polymer is styrene homopolymer (crystal polystyrene), styrene copolymer, and specifically copolymers (including terpolymers), which contain a styrenic structural unit (optionally substituted), however combined with one or more other structural units. In this embodiment styrene-based polymer is used in the form of pellets to produce molded parts, for example electronic molded parts.

Non-limiting examples of styrene-based copolymers are described below.

HIPS (high impact polystyrene) is a rubber-modified copolymer of styrenic monomers, obtainable, for example, by mixing an elastomer (butadiene) with the (optionally substituted) styrenic monomer (s) prior to polymerization. Characteristics and compositions of HIPS are described, for example, in "Encyclopedia of Polymer Science and Engineering", Volume 16, pages 88 - 96 (1985).

ABS in the context of the present invention is a family of copolymers and terpolymers that include the structural units corresponding to styrene (optionally substituted), acrylonitrile and butadiene, regardless of the composition and method of production of said polymers. Characteristics and compositions of ABS are described, for example, in Encyclopedia of Polymer Science and Engineering, Volume 16, pages 72 - 74 (1985).

SAN (styrene acrylonitrile) is the copolymer of acrylonitrile and styrene, and SMA (styrene maleic anhydride) is the copolymer of styrene with maleic anhydride. Characteristics of SAN and SMA are described in "Encyclopedia of Polymer Science and Engineering", Volume 16, pages 72 - 73 (1985).

It is noted that the flame-retarded styrenic polymer composition of the invention may contain an alloy of a styrene-based polymer, namely, a blend of styrene-containing polymer as set forth above with a second polymer or copolymer (such blends are obtained by extruding pellets of the styrene-containing polymer and pellets of the second polymer in desired proportions).

In one non-limiting embodiment the brominated flame retardant is an aliphatic and/or low melting brominated flame retardant.

In one non-limiting embodiment herein, the brominated flame retardant is selected from the group consisting of hexabromocyclododecane (FR-1206 available from ICL-IP), tetrabromobisphenol A bis (2,3-dibromopropyl ether) (FR-720 available from ICL-IP), pentabromobenzylbromide (FR-706 available from ICL-IP), tetrabromobisphenol A bis(2,3-dibromo-2-methylpropyl ether), tribromophenol allyl ether, tetrabromobisphenol A bis(allyl ether), tris(2,3-dibromopropyl) triazine, tetrabromobisphenol A (FR-1524 available from ICL-IP) and combinations thereof.

As will be appreciated by the skilled person the above examples are only provided by way of illustration, since many differently substituted bromine flame retardants or mixtures thereof can be used for the purpose of the invention, which is not meant to be limited to any particular compound. It will be understood herein that any bromine-containing compound or any combination of any of such bromine-containing compounds described herein can be used in the present invention regardless of its consideration by those in the art previously as a "brominated flame retardant."

In one non-limiting embodiment herein, the brominated flame retardant has a melting point of less than 300 degrees Celsius, preferably less than 260 degrees Celsius

In one aspect of the invention herein, the at least one solid phosphate ester has a melting point of at least 80 degrees Celsius, most preferably at least 100 degrees Celsius.

In one embodiment of the invention herein, the solid phosphate ester is of the general formula (I): 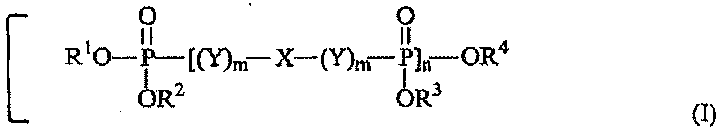 wherein each of R¹, R², R³ and R⁴ are phenyl, X is a divalent phenylene group such that the phosphate ester is a hydroquinone biphosphate, n has an average value of from 1.0 to 2.0, and m is 0.
particularly preferred oligomeric bis-phosphate within formula (I) above is hydroquinone bis(diphenyl phosphate), i.e., R¹, R², R³ and R⁴ are each phenyl.

Free-radical generators, most preferably C-C initiators may be included in the styrenic polymer composition; in addition, it is also known that they can increase the efficiency of the flame retardant compound. Such free-radical generators are therefore also applied as part of the styrenic polymer composition. The addition of such "free-radical generators" enables, therefore, the use of lower levels of brominated flame retardant.

Some non-limiting examples of free-radical generators include 2,3-dimethyl-2,3-diphenylbutane; bis(alpha-phenylethyl) sulfone; 1,1'-diphenylbicyclohexyl; 2,2'-dimethyl-2,2¹-azobutane; 2,2'-dibromo-2,2'-azobutane; 2,2'-dichloro-2,2'-azobutane; 2,2'-dimethyl-2,2'-azobutane-3,3'4,4'-tetracarboxylic acid; as well as stable organic peroxides like dicumylperoxide, benzoyl peroxide.

Moreover, there can be employed optional components other than those mentioned above, for instance, other auxiliaries such as nucleating and foaming agents, cross-linking agents, stabilizers, surfactants, pigments/dye(s), flame retardants, chain-extending agents, and fillers within a range which would not hinder the object of the present invention.

The styrenic polymer composition may optionally further comprise Tris(tribromoneopentyl)phosphate, Tribromoneopentylalcohol, Tetrabromobisphenol-A, bis(2,3-dibromopropyl ether), Brominated Epoxy Oligomer, or hindered amines (NOR) and mixtures thereof.

In one non-limiting embodiment herein the mixture present in the styrenic polymer composition can comprise bromine flame retardant component (a) in an amount of from 0.2 to 10.0 weight percent, preferably from 0.5 to 5.0 weight percent, and most preferably from 0.5 to 2.5 weight percent and phosphate ester component (b) is in an amount of from 0.2 to 10.0 weight percent, preferably from 0.5 to 3.0 weight percent, and most preferably from 0.5 to 2.0 weight percent, such weight percent being based on the total weight of the mixture.

A flame retardant effective amount can vary dramatically depending on the components of the mixture and the specific stryenic polymer and one skilled in the art can determine what would be a flame retardant effective amount. In one embodiment herein such above described amounts of component (a) and (b) as described herein can comprise such flame retardant effective amounts.

In one non-limiting embodiment herein the styrenic polymer composition can comprise where the styrenic polymer is present in an amount of from 80.0 to 99-6 weight percent, preferably from 90.0 to 99.0 weight percent, and most preferably from 95.0 to 98.5 weight percent, and the mixture is present in an amount of from 20.0 to 0.4 weight percent, preferably from 10.0 to 1.0 weight percent, and most preferably from 5.0 to 1.5 weight percent, said weight percent being based on the total weight of the styrenic polymer composition.

Methods for producing polystyrene foam of the present invention are not particularly limited. Various methods commonly used in the art may be employed. For example, various methods described in, any of U.S. Patent No. 6,579,911, WO 2004/094517, WO 2008/127753, WO 2008127753, EP 1724304 A1, WO 2007/019120 and WO 2008/121135.

The foam can be prepared by extrusion, injection molding, extrusion compounding or any other known technology. The polystyrene foam may be made by mixtures of polystyrenes, solid phosphate ester, brominated flame retardant, and optionally, free-radical generators, and different technologies of nucleating and blowing agents, respectively. In one non-limiting embodiment the polystyrene foam is prepared by suspension polymerization of styrene in the presence of the mixture described herein.

In one embodiment herein an article is provided which comprises the styrenic polymer composition described herein, specifically wherein the styrenic polymer is a polystyrene foam, such as for example an extruded polystyrene foam (XPS) or an expandable polystyrene foam (EPS). In one embodiment the styrenic polymer composition and the article made there from as described herein can be formed by extrusion, extruder compounding and/or injection molding. The article as described herein can be a molded article.

In one embodiment herein the heat distortion temperature (HDT) of the styrenic polymer composition and article formed there from as described herein is at least 70 degrees Celsius, preferably at least 73 degrees Celsius and most preferably at least 75 degrees Celsius.

In one embodiment herein flame retardance (LOI value) of the styrenic polymer composition and article formed there from as described herein is at least 24, preferably at least 28 and most preferably at least 30.

The process of manufacturing extruded styrenic polymer foam usually comprises the following steps: a) all of the constituents are blended in any conventional manner and in any desired order. For example the constituents can first be dry mixed and then fed to a twin screw extruder to obtain a blended material for feed to a molding apparatus, b) A more convenient way to add the flame retardant system (mixture) to the styrenic polymer is a master batch, which is a concentrated, heat blended or extruded mixture of the various additives in the polymer, c) The master batch is then added to the bulk of the styrenic polymer material in proportions to give the desired level of additives in the final blended product, d) Styrenic foamed articles are formed by mixing the additives individually or by master batch with the polymer and then feeding the mixture to an extruder with a foaming agent and a nucleating agent. Extrusion technology for the production of foamed polystyrene as described herein is known to those skilled in the art

It will be understood herein that "MB" as used herein is master batch, which is a concentrate of flame retardant in a resin. It is used to produce a proper concentration of flame retardant, by adding MB to virgin resin instead of the flame retardant itself. The use of MB is commonly done, particularly when there is a desire to avoid the handling of dusty powders.

In another embodiment of this invention pellets of the mixture of bromine flame retardant, phosphorus flame retardant additive (PFR) and any synergists including but not limited to free-radical generator are produced. The pellets are produced by solid blending of the components and pelletization by any known technique known by those skilled in the art. Use of pellets in place of powders helps to avoid dusting during extrusion of PS foam. It is also understood that brominated flame retardant and phosphorus flame retardant can be pelletized separately and introduced in the mixture of the styrenic polymer composition herein in the form of pellets.

It will be understood herein that the styrenic polymer composition herein can itself be an article or the styrenic polymer composition can be molded or extruded to form the article. The molding and extrusion processes are well known by those skilled in the art. The polystyrene foam can be formed by injection molding or extrusion or in an extruder or a combination of any of these processes, or in any manner known to those skilled in the art.

In one embodiment herein there is provided herein a process of making the styrenic polymer composition as described herein comprising compounding the styrenic polymer, the at least one brominated flame retardant (a) and the at least one solid phosphate ester (b) in any order or combination.

In one non-limiting embodiment herein the styrenic polymer composition is in the absence of a metal phthalocyanine compound or complexes. In one non-limiting embodiment the styrenic polymer compositon herein can be in the absence of an aromatic polycarbonate. In yet another non-limiting embodiment herein the styrenic polymer composition can be in the absence of bromine containing flame retardant that contains phosphorus atoms and/or in the absence of phosphate compound that contains bromine atoms. In yet another non-limiting embodiment herein the styrenic polymer composition can be in the absence of acrylonitrile butadiene styrene (ABS) resin. In yet another non-limiting embodiment herein the styrenic polymer composition can be in the absence of hindered amine. In yet another non-limiting embodiment herein the bromine flame retardant can be in the absence of polycarbonate.

### EXAMPLES

It will be understood herein that the TPP, BDP and RDP are being used for comparative purposes herein. All percents unless indicated otherwise are weight percent based upon the total weight of all components present in the composition of the particular example.

### EXAMPLES 1-1 to 1-16

The examples herein describe polystyrene (PS) formulations in which a flame retardant (FR) system (mixture) is based on combination of brominated flame retardants and solid (examples) or liquid (comparative examples) phosphate ester. The synergism which is demonstrated is expressed in Limited Oxygen Index (LOI) values.

In step 1 PS formulations containing FR-706 or HBCD with TPP; RDP; BDP; hydroquinone bis(diphenyl phosphate) (HDP); were compounded and molded. LOI and heat distortion temperature (HDT) were tested.

Formulations containing combinations of FR-706 or HBCD with TPP or HDP gave the highest LOI values.

HDT results for phosphorous FRs were lower than the reference. Formulations containing TPP gave the lowest HDT result.

In step 2, Polystyrene (PS) formulations containing tetrabromobisphenol A bis(2,3-dibromo-2-methyl propyl ether) or tris(tribromoneopentyl) phosphate (FR-370) with TPP or HDP; were compounded and molded. LOI and HDT were tested.

Formulations containing tetrabromobisphenol A bis(2,3-dibromo-2-methyl propyl ether) with TPP or HDP gave the same high LOI values; HDT results were lower than the reference, HDP gave higher HDT value.

Formulations containing FR-370 gave the significantly lower LOI values. Formulations containing FR-370 with TPP or HDP gave slightly higher LOI values than the formulation containing FR-370 only. HDT results were higher with HDP than with TPP.

### 1. Materials

The materials used in this report are presented in table 1-1.

### 2. Compounding

The polymer pellets, FRs (Br and Phosphorous) were weighed on semi analytical scales with consequent manual mixing in plastic bags. The mixtures were fed together with polystyrene resin into the main feeding port of the extruder using an Accurate feeder. Compounding was performed in a twin screw co-rotating extruder L/D=32 ex Berstorff ZE25. The compounding conditions are presented in Table 1-2.

The obtained pellets were dried in a circulating air oven ex Heraeus instruments at 75°C for 4 hours.

### 3. Injection moulding

Injection molding of 3.2 mm and LOI specimens was performed in Allrounder 500-150 ex. Arburg using mold # S 18572.

The injection molding conditions are presented in Table 1-3.

### 4. Conditioning

Test specimens of the LOI were kept in controlled atmosphere for at least 88 hour at 23°C ± 2°C, 50%±5 RH before test.

### 5. Test methods

Tests used in this work are summarized in table 1-4.

### 6. Results and discussion

Composition and LOI results of FR-706 formulations are presented in table 1-5. Composition and LOI results of HBCD formulations are presented in table -1-6. Composition and LOI results of tetrabromobisphenol A bis(2,3-dibromo-2-methyl propyl ether) formulations are presented in table 1-7.

Composition and LOI results of FR-370 formulations are presented in table 1-8.

The formulation containing FR-370 gave low LOI values, the combinations between the FR-370 and TPP or HDP gave a slightly higher LOI value. Combinations of FR-706 or HBCD with BDP or RDP (Comp. Ex. 1-3, 1-4, 1-8 and 1-9) gave good LOI values, but were difficult to feed to the extruder because they are viscous liquids. Combination of FR-706 or HBCD and TPP (comp. ex. 1-2 and 1-7) gave high LOI, but HDT was low.

**TABLE 1-1 Materials**

| TRADE NAME (PRODUCER) | GENERAL INFO | FUNCTION |
|---|---|---|
| PS Crystal 158K ex BASF | polystyrene | Plastic matrix |
| FR 706 ex ICL-IP | Penta Bromo Benzyl Bromide | Br-FR |
| FR1206 ex ICL-IP | Hexabromocyclododecane (HBCD) | Br-FR |
| FR-370 ex ICL-IP | Tris (tribromoneopentyl) Phosphate | Br-FR |
| Tetrabromobisphenol A bis(2,3-dibromo-2-methylpropvi ether) | Tetrabromobisphenol A bis(2,3-dibromo-2-methylpropyl ether) | Br-FR |
| Disflamol TPP ex Lanxess | Triphenyl phosphate | P-FR |
| Fyrolflex RDP ex ICL-IP | Resorcinol bis (diphenyl phosphate) | P-FR |
| Fyrolflex BDP ex ICL-IP | Bis-phenol A-bis (diphenyl phosphate) | P-FR |
| HDP | Hydroquinone bis(diphenylphosphate) | P-FR |

**TABLE 1-2 Compounding PS in co-rotating twin screw extruder ex Berstorff.**

| Parameter | Units | Set value | Read value |
|---|---|---|---|
| Feeding zone temperature | °C | no heating | |
| T₂ | °C | 20 | 54-82 |
| T₃ | °C | 160 | 156-170 |
| T₄ | °C | 200 | 196-216 |
| T₅ | °C | 200 | 200-220 |
| T₆ | °C | 200 | 200-228 |
| T₇ | °C | 210 | 203-230 |
| T₈ | °C | 210 | 210-215 |
| T₉ | °C | 210 | 205-226 |
| Temperature of melt | °C | | 204-221 |
| Motor speed | RPM | 340 | 228-230 |

**TABLE 1-3 Regime ofPS injection molding in Arburg 320S Allrounder 500-150.**

| Parameter | Units | Read value |
|---|---|---|
| Feeding zone (T₁) | °C | 180 |
| T₂ | °C | 200 |
| T₃ | °C | 200 |
| T₄ | °C | 200 |
| T₅ (nozzle) | °C | 200 |
| Mold temperature | °C | 30 |
| Injection pressure | bar | 800 |
| Holding pressure | bar | 500 |
| Back pressure | bar | 30 |
| Cycle time | sec | 31.5 - 32.5 |
| Holding time | sec | 6 |
| Cooling time | sec | 8 |
| Filling volume | ccm | 23 |
| Injection speed | ccm/sec | 20 |

**TABLE 1-4 Test methods.**

| PROPERTY | METHOD | APPARATUS |
|---|---|---|
| LOI Limiting Oxygen Index | ASTM D 2863-00 | FTT (Fire Testing Technology) Inc. |
| HDT | ASTM D-648-72 Under flexural load 18.5 kg/cm² | HDT/VICAT- plus Davenport, Lloyd instruments |

It will be understood herein that the % (percent) in the below tables are weight percent based on the total weight of all of the components of the composition in each respective example.

**TABLE 1-5 Composition and LOI results (FR-706).**

| | Units | Comp. 1-1 | Comp. 1-2 | Comp. 1-3 | Comp. 1-4 | Ex. 1-5 |
|---|---|---|---|---|---|---|
| PS ex BASF | % | 97.6 | 94.4 | 94.8 | 94.2 | 95.0 |
| FR-706 | % | 2.4 | 2.4 | 2.4 | 2.4 | 2.4 |
| TPP | % | | 3.2 | | | |
| RDP | % | | | 2.8 | | |
| BDP | % | | | | 3.4 | |
| HDP | % | | | | | 2.6 |
| Br calculated | % | 2 | 2 | 2 | 2 | 2 |
| P calculated | % | 0 | 0.3 | 0.3 | 0.3 | 0.3 |
| LOI | % | 24.7 | 28 | 26.3 | 25.8 | 27.2 |
| Standard Deviation | % | 0.32 | 0.17 | 0.19 | 0.16 | 0.16 |
| HDT | °C | 81 | 74 | 77 | 78 | 78 |

**TABLE 1-6 Composition and LOI results (HBCD).**

| | UNITS | REF | TPP | RDP | BDP | HDP |
|---|---|---|---|---|---|---|
| | | Comp. 1-6 | Comp. 1-7 | Comp. 1-8 | Comp. 1-9 | Ex. 1-10 |
| PS ex BASF | % | 97.3 | 94.1 | 94.5 | 93.9 | 94.7 |
| HBCD | % | 2.7 | 2.7 | 2.7 | 2.7 | 2.7 |
| TPP | % | | 3.2 | | | |
| RDP | % | | | 2.8 | | |
| BDP | % | | | | 3.4 | |
| HDP | % | | | | | 2.6 |
| Br calculated | % | 2 | 2 | 2 | 2 | 2 |
| P calculated | % | 0 | 0.3 | 0.3 | 0.3 | 0.3 |
| LOI | % | 24.5 | 28.5 | 27.5 | 25.6 | 28.3 |
| Standard Deviation | % | 0.20 | 0.21 | 0.11 | 0.15 | 0.11 |
| HDT | °C | 82 | 77 | 78 | 79 | 78.5 |

**TABLE 1-7 Composition and LOI results tetrabromobisphenol A bis(2,3-dibromo-2-methylpropyl ether).**

| | UNITS | Comp. 1-11 | Comp. 1-12 | Ex. 1-13 |
|---|---|---|---|---|
| PS ex BASF | % | 96.9 | 93.7 | 94.3 |
| Tetrabromobisphenol A bis(2,3-dibromo-2-methylpropyl ether) | % | 3.1 | 3.1 | 3.1 |
| TPP | % | | 3.2 | |
| HDP | % | | | 2.6 |
| Br calculated | % | 2 | 2 | 2 |
| P calculated | % | 0 | 0.3 | 0.3 |
| LOI | % | 23 | 27 | 27 |
| Standard deviation | % | 0.15 | 0.15 | 0.19 |
| HDT | °C | 79 | 73 | 76 |

**TABLE 1-8 Composition and LOI results (FR-370).**

| | UNITS | REF | TPP | HDP |
|---|---|---|---|---|
| | % | Comp. 1-14 | Comp. 1-15 | Ex. 1-16 |
| PS ex BASF | % | 97.1 | 93.9 | 94.5 |
| FR-370 | % | 2.9 | 2.9 | 2.9 |
| TPP | % | | 3.2 | 2.6 |
| HDP | % | | | |
| Br calculated | % | 2 | 2 | 2 |
| P calculated | % | 0 | 0.3 | 0.3 |
| LOI | % | 21.3 | 22.1 | 22.4 |
| Standard deviation | % | 0.11 | 0.2 | 0.3 |
| HDT | °C | 81 | 73 | 76 |

### Examples 2-1 and 2-2

All abbreviations used in Examples 1-1 to 1-16 apply equally herein. All processing conditions, compounding and testing used in Examples 1-1 to 1-16 applied equally herein Formulations of crystal PS containing 2%Br coming from FR-706 or HBCD and formulations in which the brominated FRs were partially replaced by HDP keeping a constant total FR concentration were compounded.

The LOI of these formulations were measured. Graph 2-1 shows dependence of LOI vs. concentration of FR 706 in FR 706 + HDP mixture, wherein concentration of FR706 changes from 0 to 2.5 wt. % and concentration of HDP changes from 2.5 to 0 wt. % Graph 2-2 shows dependence of LOI vs. concentration of HBCD in HBCD + HDP mixture, wherein concentration of HBCD changes from 0 to 2.7 wt. % concentration of HDP changes from 2.7 to 0 wt. %

It can be noted that the maximum LOI was obtained when 50% of brominated FR was replaced by HDP.

A synergism between HDP and FR-706 or HBCD can be observed. This strong synergism is unexpected at these very low phosphorus contents.

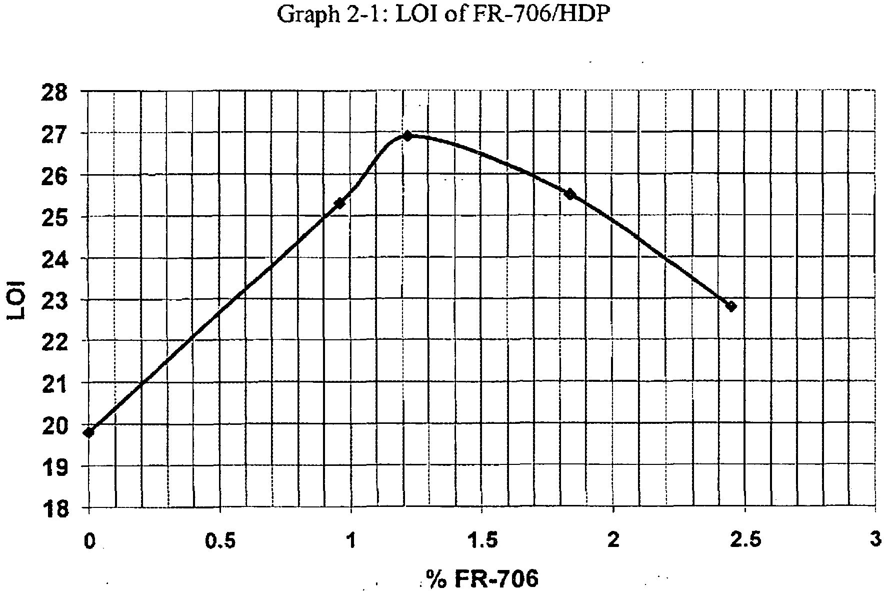

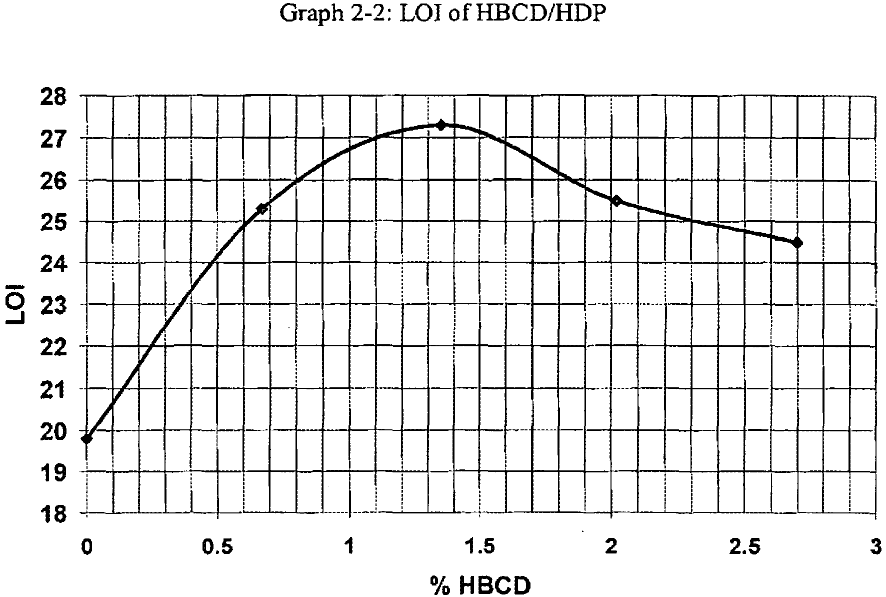

### EXAMPLES 3-1 to 3-17

### 1. Materials

The materials used in this report are presented in Table 3-1.

### 2. Compounding

Compounding was accomplished using a C. W. Brabender conical twin screw co-rotating extruder with an L/D = 10.6. Formulations contain 0.25% calcium stearate. The extrudate was pelletized using a Conair model 304 pelletizer. The resulting pellets were dried in a forced air oven at 80°C for 16 hours. The compounding conditions are presented in Table 3-2

### 3. Injection molding

Test specimens were prepared by injection molding using an Arburg 270S Allrounder 250-150. The injection molding conditions are presented in Table 3-3.

### 4. Conditioning

Specimens were conditioned at 23°C for 72 hours before testing.

### 5. Test methods

Tests used in this work are summarized in Table 3-4.

### 6. Results

Formulations and test results are summarized in Tables 3-5 and 3-6.
(FR)=flame retardant

**TABLE 3-1 Materials**

| TRADE NAME (PRODUCER) | Chemical name or structure | FUNCTION |
|---|---|---|
| Polystyrol 158K ex. BASF | Crystal Polystyrene Resin - General Purpose | Plastic matrix |
| Disflamol TPP ex Lanxess | Triphenyl Phosphate | FR |
| HDP | Hydroquinone bis(diphenyl phosphate) | FR |
| RXP | Resorcinol bis(di-2,6-xylyl phosphate) | FR |
| 4,4'-bisphenol bis(di-2,6-xylyl phosphate) | 4,4'-biphenol bis(di-2,6-xylyl phosphate) | FR |
| PXP | Piperazine bis(di-2,6-xylyl phosphoramidate) | FR |
| FR-706, ex ICL-IP | Penatabromobenzyl bromide | FR |
| FR-1206 ex. ICL-IP | Hexabromocyclododecane | FR |
| C-C initiator, SI Group | 2,3-dimethyl-2,3-diphenylbutane | Synergist |
| Calcium Stearate Mallinckrodt | Processing aid | Lubricant |

**TABLE 3-2 Compounding in Brabender co-rotating twin-screw extruder.**

| PARAMETER | UNITS | Set values |
|---|---|---|
| Screws | | Conical twin |
| Feeding zone temperature (T₁) | °C | No heating |
| T₂ | °C | 170 |
| T₃ | °C | 180 |
| T₄ | °C | 185 |
| T₅ (Die) | °C | 190 |
| Temperature of melt | °C | ~192 |
| Screw speed | RPM | 125 |
| Feeding rate | Kg/h | 2.5 |

**TABLE 3-3 Injection molding parameters - Arburg 270S Allrounder 250-150**

| PARAMETER | UNITS | Set values |
|---|---|---|
| T₁ (Feeding zone) | °C | 180 |
| T₂ | °C | 190 |
| T₃ | °C | 210 |
| T₄ | °C | 220 |
| T₅ (nozzle) | °C | 225 |
| Mold temperature | °C | 35 |
| Injection pressure | psi | 650 |
| Holding pressure | psi | 220 |
| Back pressure | psi | 50 |
| Injection time | sec | 1.2 |
| Holding time | sec | 4 |
| Cooling time | sec | 25 |
| Mold closing force | T | 22.5 |
| Filling volume (portion) | ccm | 1.25 |
| Injection speed | ccm/sec | 1.80 |

**TABLE 3-4 Test methods**

| PROPERTY | METHOD | APPARATUS |
|---|---|---|
| Oxygen Index (LOI) | ASTM D 2863 - 87 Type A | Stanton Redcroft FTA Flammability Unit |
| HDT -Heat Deflection Temperature | ASTM D 648 - 88 | Automatic Deflection Tester |
| | | Tinius Olsen Model DS-5 |

Table 3-5 and Table 3-6 show flammability performance and HDT of crystalline PS with FR-706 and various bisphosphates in the presence and absence of C-C initiator free-radical initiator. All bisphosphates show very similar performance. However TPP showed lower HDT probably due to lower melting point and stronger plasticizing effect.

**TABLE 3-5 Flammability performance and HDT of crystalline polystyrene with FR -706 and various solid bisphosphates in the presence of C-C initiator**

| Example | Type of PFR | CPS Polystyrol 158 K % | FR-706 % | PFR % | C-C initiator % | Total FR % | % Br | % P | HDT 264psi °C | LOI |
|---|---|---|---|---|---|---|---|---|---|---|
| Ex. 3-1 | HDP | 95.23 | 1.81 | 2.86 | 6.10 | 4.77 | 1.5 | 0.30 | 76 | 32.7 |
| Comp. 3-2 | TPP | 95.23 | 1.81 | 2.86 | 0.10 | 4.77 | 1.5 | 0.27 | 70 | 32.4 |
| Comp. 3-3 | TPP | 94.93 | 1.81 | 3.16 | 0.10 | 5.07 | 1.5 | 0.30 | 69 | 32.4 |
| Comp. 3-4 | RXP | 95.23 | 1.81 | 2.86 | 0.10 | 4.77 | 1.5 | 0.26 | 73 | 33.2 |
| Comp. 3-5 | RXP | 94.76 | 1.81 | 3.33 | 0.10 | 5.24 | 1.5 | 0.30 | 72 | 33.6 |
| Comp. 3-6 | 4,4'-biphenol bis(di-2,6-xyly) phosphate) | 95.23 | 1.81 | 2.86 | 0.10 | 4.77 | 1.5 | 0.23 | 75 | 33.0 |
| Comp. 3-7 | 4,4'-biphenot bis(di-2,6-xylyl phosphate) | 94.39 | 1.81 | 3.70 | 0.10 | 5.61 | 1.3 | 0.30 | 73 | 33.4 |
| Comp. 3-8 | PXP | 95.23 | 1.81 | 2.86 | 0.10 | 4.77 | 1.5 | 0.27 | 76 | 32.8 |
| Comp. 3-9 | PXP | 94.9 | 1.81 | 3.19 | 0.10 | 5.10 | 1.5 | 0.30 | 74 | 33.2 |

**TABLE 3-6 Flammability performance and HDT of crystalline polystyrene with FR -706 and various bisphosphates in the absence of C-C initiator**

| Example | Type of PFR | CPS Polystyrol 158 K % | FR-706 % | PFR % | Total FR % | % Br | % P | HDT 264psi °C | LOI |
|---|---|---|---|---|---|---|---|---|---|
| Ex. 3-10 | HDP | 97.6 | 1.2 | 1.2 | 2.4 | 1.0 | 0.13 | 74 | 25.5 |
| Ex. 3-11 | HDP | 98 | 1.0 | 1.0 | 2.0 | 0.85 | 0.11 | 75 | 25.1 |
| Comp. 3-12 | TPP | 97.6 | 1.2 | 1.2 | 2.4 | 1.0 | 0.11 | 75 | 25.7 |
| Comp. 3-13 | TPP | 98 | 1.0 | 1.0 | 2.0 | 0.85 | 0.095 | 75 | 25.9 |
| Comp. 3-14 | RXP | 97.6 | 1.2 | 1.2 | 2.4 | 1.0 | 0.11 | 77 | 25.0 |
| Comp. 3-15 | RXP | 98 | 1.0 | 1.0 | 2.0 | 0.85 | 0.09 | 77 | 24.4 |
| Comp. 3-16 | PXP | 97.6 | 1.2 | 1.2 | 2.4 | 1.0 | 0.11 | 78 | 24.7 |
| Comp. 3-17 | PXP | 98 | 1.0 | 1.0 | 2.0 | 0.85 | 0.094 | 77 | 24.6 |

### EXAMPLES 4-1 to 4-3

This example shows production ofmasterbatch (MB) of HDP/FR-706 to be used as FR in XPS formulation

Compositions of formulations are presented in Table 4-1.

A MB was compounded in a co-rotating twin-screw extruder.

The ratio was 24% of FR 706 and 16% HDP.

The compounding was divided to two stages, first, the FR-706 was compounded with PS; HDP was added to the first compound in a second stage.

In order to evaluate the quality of the MB, a compound was made with 6 % MB in neat PS; LOI specimens were further molded; The LOI was 25.13%.

The masterbatch (MB) was sent to measure %Br & %P, the result was 21 % Br that correspond to 25.8% FR - 706,1.6 % P that correspond to 14.6% HDP.

Chemical analysis (%Br, %P) is shown in Table 4-2

**Table 4-1**

| Formulation | Ex. 4-1 | Ex. 4-2 | Ex. 4-3 |
|---|---|---|---|
| PS Crystalline ex. DOW | 75% | 50% | 94% |
| FR-706 ex ICL-IP As identified in Table 3-1 | 25% | 24% | - |
| HDP | 0% | 16% | - |
| MB | | | 6% |
| Total | 100% | 100% | 100% |

**Table 4-2**

| | Set values | Found values |
|---|---|---|
| PS | 60.0% | 59.7% |
| FR-706 | 24.0% | 25.8% |
| HDP | 16.0% | 14.6% |
| total % | 100.0% | 100.0% |

| | %P | %Br |
|---|---|---|
| MB | 1.6% | 21.0% |
| FR-706 | | 81.5% |
| HDP | 10.7% | |

### EXAMPLES 5-1 to 5-12

Styrene was purified with aqueous 5% NaOH solution, separated from the water and rinsed with distilled water until the pH of the water was 6-7. The styrene was distilled before each polymerization.

The aqueous phase was prepared in a 0.25 1 polymerization reactor equipped with a stirrer, jacket and bottom faucet. 1.1 gram of polyviol W 48/20 (Polyvinyl alcohol, CAS [98002-48-3] ex. Aldrich) was dissolved in 140 ml of distilled water at 80°C, with intensive stirring (400 rpm) over 20-30 minutes. The system was purged with nitrogen.

The styrene-initiator solution was prepared in a separate vessel by the dissolution of 0.25 g of dibenzoyl peroxide (BP, 75%, the remainder H₂O) in ~40 g of purified styrene at room temperature (RT). In the polymerizations with various FRs the initiator was dissolved after complete dissolution of all the FR in styrene. Styrene-initiator or initiator + FR solution was fed as one portion into the reactor containing the aqueous phase, heated to 80°C. The polymerization was carried out for 2 hours with agitation at 400 rpm, 2 hours at 450-500 rpm and 5 hours at 550 rpm. The inert gas purge was continued during the polymerization process. The flat flange lid was equipped with a condenser and cooled by ice.

The temperature in the heating system was elevated to 93°C after 7 hours and the polymerization finished in 2 hours with agitation at 500-550 rpm, with a steady flow of inert gas and with cooling of the flat flange lid by ice.

The suspension after the end of the polymerization was transferred into a glass vessel with 500 ml of cold distilled water, with magnetic stirring. The agitation was stopped after several minutes, the water and the mother liquor of the polymerization was decanted, the polymer beads were washed twice at least with decantation, and then were transferred to a glass Buchner funnel. The rinsing was carried out with distilled water, and finally with methanol. The wet beads were dried at 60°C.

The final dried beads had a spherical shape. The M_{w}, Mₙ and D of PS beads were estimated by GPC. The glass transition temperature of (Tg) of the PS beads was estimated by DSC (10°C/ min, nitrogen, second run).

The bromine content in the PS beads was measured by decomposition in an oxygen bomb, followed by titration with AgNO₃. The phosphorous content in PS beads was measured by a colorimetric test after decomposition in a Parr bomb with Na₂O₂.

An LOI test of molded specimens type IV, ASTM D 2863-00 was conducted. The specimens for the LOI test were prepared by heating the beads in an oven, compression molding and plate cutting.

**Table 5-1 Properties of suspension PS containing combinations of tetrabromobisphenol A_bis(2,3-dibromo-2-methylpropyl ether) with various aryl phosphates**

| Example No | Comp. 5-1 | Comp. 5-2 | Comp. 5-3 | Ex. 5-4 | Ex. 5-5 | Comp. 5-6 | Comp. 5-7 |
|---|---|---|---|---|---|---|---|
| Br-FR | - | - | Tetrabrom obisphenol A bis(2,3-dibromo-2-methylpro pyl ether), | Tetrabrom obisphenol A bis(2,3-dibromo-2-methylpro pyl ether), | Tetrabrom obisphenol A bis(2,3-dibromo-2-methylpro pyl ether), | Tetrabrom obisphenol A bis(2,3-dibromo-2-methylpro pyl ether), | Tetrabrom obisphenol A bis(2,3-dibromo-2-methylpro pyl ether), |
| P-FR | - | HDP | - | HDP | HDP | TPP | RDP |
| Br% | - | - | 0.68 | 0.69 | 0.69 | 0.68 | 0.69 |
| P % | - | 0.132 | - | 0.113 | 0.053 | 0.046 | 0.054 |
| Total FR, % | - | 1.22 | 1.06 | 2.10 | 1.54 | 1.54 | 1.56 |
| Br-FR/P-FR | - | 0/1 | 1/0 | 1:1 | 2/1 | 2/1 | 2/1 |
| M_{w} | 157820 | 151080 | 158850 | 149700 | 155610 | 130510 | 151190 |
| D | 2.36 | 2.56 | 2.49 | 2.32 | 2.27 | 2.32 | 2.34 |
| T_{g}, °C | 101.9 | 101 | 101.5 | 98.1 | 100.3 | 99.8 | 98.6 |
| LOI, O2% | 17.8 | 17.9 | 19.2 | 19.8 | 19.6 | 19.6 | 19.0 |

| | | | | | | | |
|---|---|---|---|---|---|---|---|
| HDP, TPP, RDP are as identified in Table 3-1 | | | | | | | |

**Table 5-2 Properties of suspension PS containing combinations of HDP with tetrabromobisphenol A bis(allyl ether) or FR-1524**

| Example No | Comp. 5-1 | Comp. 5-2 | Comp. 5-8 | Comp.5-9 | Ex. 5-10 | Comp. 5-11 | Ex. 5-12 |
|---|---|---|---|---|---|---|---|
| Br-FR | | - | Tetrabromo bisphenol A bis(allyl ether) | Tetrabromo bisphenol A bis(allyl ether) | Tetrabromo b isphenol A bis(allyl ether) | FR-1524 | FR-1524 |
| P-FR | | HDP | - | - | HDP | - | HDP |
| Br, % | | - | 0.7 | 1.34 | 0.7 | 1.34 | 0.69 |
| P, % | | 0.132 | - | - | 0.144 | - | 0.129 |
| Total FR, % | | 1.22 | 1.33 | 2.6 | 2.7 | 2.32 | 2.42 |
| Br-FR/P-FR | | 0/1 | 1/0 | 1/0 | 1/1 | 1/0 | 1/1 |
| Mw | 157820 | 151080 | 146930 | 141090 | 145470 | 155380 | 154850 |
| D (Mw/Mn) | 2.36 | 2.56 | 2.30 | 2.3 | 2.29 | 2.15 | 2.47 |
| Tg (DSC), °C | 101.9 | 101 | 96.8 | 91.7 | 93.2 | 94.7 | 97.4 |
| LOI, %O₂ | 17.8 | 17.9 | 21.3 | 21.6 | 22.0 | 18.8 | 19.4 |

The molecular weight Mw in Tables 5-1 and 5-2 is weight average molecular weight. D is polydispersity, which is a known measurement by those skilled in the art. Mn is number average molecular weight.

### What can be seen from Table 5-1:

1. There is a slight but clear synergistic effect for the combination of tetrabromobisphenol A bis(2,3-dibromo-2-methylpropyl ether)with solid aryl phosphates such as HDP and TPP.
   There is no such effect with liquid RDP.
2. Unlike HDP, TPP reduced the Mw.

### What can be seen from Table 5-2:

1. There is a clear synergistic effect for the combination of HDP with not only tetrabromobisphenol A bis(2,3-dibromo-2-methylpropyl ether) (see Table 5-1) but also with tetrabromobisphenol A bis(allyl ether) and even Tetrabromobisphenol A.
2. Tetrabromobisphenol A bis(allyl ether) reduced the Mw to some extent.
3. Tetrabromobisphenol A bis(allyl ether) and Tetrabromobisphenol A reduced the Tg of the polymer.

### EXAMPLE 6-1

This example illustrates Dry granulation of powdered hydroquinone bis(diphenylphosphate), HDP. Powdered HDP was compacted using a hydraulic press. 20 g tablets were prepared in a tungsten carbide cylindrical mold of 2.5 cm diameter. The pressure applied was 300 kg/cm². Crushing strength (3.1 kg/cm²) was measured by standard compression test. The tablets were then grinded and sieved through 3.35 mm and 1 mm sieve to give granules of HDP.

### EXAMPLE 6-2

This example illustrates dry granulation of a mixture of FR-706 and HDP. Powdered FR-706 and HDP were mixed in a weight ratio of 1:1, followed by coating with 1% wt. paraffin oil. The mixture obtained was compacted using a hydraulic press. 20 g tablets were prepared in a tungsten carbide cylindrical mold of 2.5 cm diameter. The pressure applied was 428 kg/cm². Crushing strength (3.1 kg/cm²) was measured by standard compression test. The tablets were then grinded and sieved through 3.35 mm and 1 mm sieve to give granules consisting of FR-706 and HDP.

## Claims

1. A styrenic polymer composition comprising a styrenic polymer and a flame retardant effective amount of a mixture comprising (a) at least one brominated flame retardant; and, (b) at least one solid phosphate ester of the general formula (I): 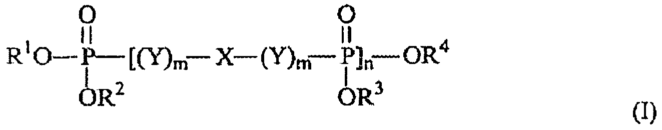 wherein each of R¹, R², R³ and R⁴ are phenyl, X is a divalent phenylene group such that the phosphate ester is a hydroquinone biphosphate, n has an average value of from 1.0 to 2.0, and m is 0.

2. The styrenic polymer composition of Claim 1 wherein the styrenic polymer is one of the following:
i) is a crystal polystyrene in the form of polystyrene foam,
ii) is an expanded polystyrene foam or an extruder compounded polystyrene foam,
iii) is HIPS, ABS, SAN or SMA.

3. The styrenic polymer composition of Claim 1 wherein the brominated flame retardant is one of the following:
i) is an aliphatic brominated flame retardant,
ii) is selected from the group consisting of hexabromocyclododecane, tetrabromobisphenol A bis (2,3-dibromopropyl ether), pentabromobenzylbromide, tetrabromobisphenol A bis(2,3-dibromo-2- methylpropyl ether), tribromophenol allyl ether, tetrabromobisphenol A bis(allyl ether), tris(2,3-dibrornopropyl) triazine, tetrabromobisphenol A, and combinations thereof,
iii) has a melting point of less than 300 degrees Celsius.

4. The styrenic polymer composition of Claim 1 further comprising one of the following:
i) a free-radical generator,
ii) a free-radical generator selected from the group consisting of 2,3-dimethyl-2,3-diphenylbutane; bis (alpha-phenylethyl) sulfone; 1,1'-diphenylbicyclohexyl; 2,2'-dimethyl-2,2'-azobutane; 2,2'-dibromo-2,2'-azobutane; 2,2'-dichloro-2,2'-azobutane; 2,2'-dimethyl-2,2'-azobutane-3,3'4,4'-tetracarboxylic acid; U'-diphenylbicyclopentyl; dicumyl peroxide, benzoyl peroxide and combinations thereof.

5. The styrenic polymer composition of Claim 1 wherein one of the following:
i) in the mixture, component(a) is present in an amount of from 0.2 to 10.0 weight percent and component (b) is present in an amount of from 0,2 to 10 weight percent based on the total weight of the mixture,
ii) the styrenic polymer is present in an amount of from 80.0 to 99,6 weight percent and the mixture is present in an amount of from 0.4 to 20 weight percent based on the total weight of the styrenic polymer composition.

6. A masterbatch comprising the styrenic polymer composition of Claim 1.

7. The styrenic polymer composition of Claim 1 wherein one of the following:
i) bromine flame retardant and phosphorus flame retardant are dry compacted and introduced into the mixture in pellet form,
ii) bromine flame retardant and phosphorus flame retardant are blended, dry compacted and introduced into the mixture in pellet form.

8. The styrenic polymer composition of Claim 2 part i) wherein one of the following:
i) the polystyrene foam is prepared by suspension polymerization of styrene in the presence of the mixture,
ii) the polystyrene foam is extruded polystyrene foam (XPS) and/or an expandable polystyrene foam (EPS).

9. An article comprising the styrenic polymer composition of Claim 1.

10. The article of Claim 9 wherein one of the following:
i) the article has a heat distortion temperature of at least 70 degrees Celsius when measured by ASTM D2863-00,
ii) the article has a LOI value of at least 24 when measured by ASTM D-648-72 under flexural load 18.5 kg/cm²,
iii) the article has been formed by extrusion compounding and/or injection molding,
iv) the article is a molded article.

11. A process of making the styrenic polymer composition of Claim 1 comprising contacting, e.g., compounding, the styrenic polymer, the at least one brominated flame retardant (a) and the at least one solid phosphate ester (b) in any order or combination.

12. A flame retarded styrenic polymer composition made by the process of Claim 11.

13. A polystyrene foam comprising the flame retarded styrenic polymer composition of claim 12.

14. The process of Claim 11 wherein bromine flame retardant and phosphorus flame retardant are one of the following:
i) are dry compacted and introduced into the mixture in pellet form,
ii) are blended, dry compacted and introduced into the mixture in pellet form.

## Patentansprüche

1. Eine Styrolpolymerzusammensetzung, umfassend ein Styrolpolymer und eine als Flammschutzmittel wirksame Menge einer Mischung, die (a) mindestens ein bromiertes Flammschutzmittel und (b) mindestens einen festen Phosphatester der allgemeinen Formel (I) umfasst: 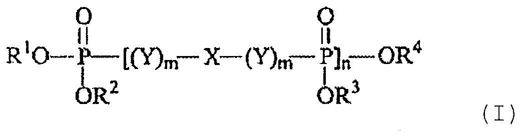 wobei jedes von R¹, R², R³ und R⁴ Phenyl ist, X eine zweiwertige Phenylengruppe ist, so dass der Phosphatester ein Hydrochinonbiphosphat ist, n einen Mittelwert von 1,0 bis 2,0 hat, und m 0 ist.

2. Die Styrolpolymerzusammensetzung gemäß Anspruch 1, wobei das Styrolpolymer eines der folgenden ist:
i) ein Kristallpolystyrol in Form eines Polystyrolschaums,
ii) ein expandierter Polystyrolschaum oder ein Extruder-gemischter Polystyrolschaum,
iii) HIPS, ABS, SAN oder SMA.

3. Die Styrolpolymerzusammensetzung gemäß Anspruch 1, wobei das bromierte Flammschutzmittel eines der folgenden ist:
i) ein aliphatisches bromiertes Flammschutzmittel,
ii) aus der Gruppe bestehend aus Hexabromcyclododecan, Tetrabrombisphenol A bis (2,3-Dibrompropylether), Pentabrombenzylbromid, Tetrabrombisphenol A bis (2,3-Dibrom-2-methylpropylether), Tribromphenolallylether, Tetrabrombisphenol A bis (Allylether), Tris(2,3-dibrompropyl)triazin, Tetrabrombisphenol A und Kombinationen davon ausgewählt ist,
iii) einen Schmelzpunkt von kleiner als 300 Grad Celsius hat.

4. Die Styrolpolymerzusammensetzung gemäß Anspruch 1, ferner eines der folgenden umfassend:
i) einen freie Radikale Erzeuger,
ii) einen freie Radikale Erzeuger, der aus der Gruppe bestehend aus 2,3-Dimethyl-2,3-diphenylbutan; Bis(alpha-phenylethyl)sulfon; 1,11'-Diphenylbicyclohexyl; 2,2'-Dimethyl-2,2'-azobutan; 2,2'-Dibrom-2,2'-azobutan; 2,2'-Dichlor-2,2'-azobutan; 2,2'-Dimethyl-2,2'-azobutan-3,3'4,4'-tetracarbonsäure; U'-Diphenylbicyclopentyl; Dicumylperoxid; Benzoylperoxid und Kombinationen davon ausgewählt ist.

5. Die Styrolpolymerzusammensetzung gemäß Anspruch 1, wobei eines der folgenden gilt:
i) in der Mischung, basierend auf dem Gesamtgewicht der Mischung, ist Bestandteil (a) in einer Menge von 0,2 Gew.-% bis 10,0 Gew.-% vorhanden und ist Bestandteil (b) in einer Menge von 0,2 Gew.-% bis 10 Gew.-% vorhanden,
ii) basierend auf dem Gesamtgewicht der Styrolpolymerzusammensetzung ist das Styrolpolymer in einer Menge von 80,0 Gew.-% bis 99,6 Gew.-% vorhanden und ist die Mischung in einer Menge von 0,4 Gew.-% bis 20 Gew.-% vorhanden.

6. Eine Vormischung, umfassend die Styrolpolymerzusammensetzung gemäß Anspruch 1.

7. Die Styrolpolymerzusammensetzung gemäß Anspruch 1, wobei eines der folgenden gilt:
i) Bromflammschutzmittel und Phosphorflammschutzmittel werden trockenverdichtet und in Pelletform in die Mischung eingebracht,
ii) Bromflammschutzmittel und Phosphorflammschutzmittel werden gemischt, trockenverdichtet und in Pelletform in die Mischung eingebracht.

8. Die Styrolpolymerzusammensetzung gemäß Anspruch 2, Teil i), wobei eines der folgenden gilt:
i) der Polystyrolschaum wird durch Suspensionspolymerisation von Styrol in der Anwesenheit der Mischung hergestellt,
ii) der Polystyrolschaum ist extrudierter Polystyrolschaum (XPS) und/oder ein expandierbarer Polystyrolschaum (EPS).

9. Ein Artikel, der die Styrolpolymerzusammensetzung gemäß Anspruch 1 umfasst.

10. Der Artikel gemäß Anspruch 9, wobei eines der folgenden gilt:
i) der Artikel hat bei einer Messung nach ASTM D2863-00 eine Wärmeverformungstemperatur von mindestens 70 Grad Celsius,
ii) der Artikel hat bei einer Messung nach ASTM D-648-72 unter einer Biegebelastung von 18,5 kg/cm² einen Grenz-Sauerstoff-Index- (LOI) -Wert von mindestens 24,
iii) der Artikel wurde durch Extrusions-Mischen und/oder Spritzgießen geformt,
iv) der Artikel ist ein geformter Artikel.

11. Ein Verfahren zum Herstellen der Styrolpolymerzusammensetzung gemäß Anspruch 1, umfassend das Kontaktieren, z.B. das Mischen, des Styrolpolymers, des mindestens einen bromierten Flammschutzmittels (a) und des mindestens einen festen Phosphatesters (b) in irgendeiner Reihenfolge oder Kombination.

12. Eine flammenhemmende Styrolpolymerzusammensetzung, die durch das Verfahren gemäß Anspruch 11 hergestellt ist.

13. Ein Polystyrolschaum, umfassend die flammenhemmende Styrolpolymerzusammensetzung gemäß Anspruch 12.

14. Das Verfahren gemäß Anspruch 11, wobei für das Bromflammschutzmittel und das Phosphorflammschutzmittel eines der folgenden gilt:
i) sie werden trockenverdichtet und in Pelletform in die Mischung eingebracht,
ii) sie werden gemischt, trockenverdichtet und in Pelletform in die Mischung eingebracht.

## Revendications

1. Composition de polymère styrénique comprenant un polymère styrénique et une quantité efficace ignifuge d'un mélange comprenant (a) au moins un agent ignifuge bromé; et (b) au moins un ester phosphate solide de formule générale (I) 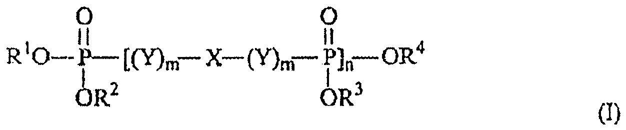 où chacun des R¹, R², R³ et R⁴ est un phényle, X est un groupe phénylène divalent tel que l'ester phosphate soit un biphosphate d'hydroquinone, n a une valeur moyenne de 1,0 à 2,0, et m est 0.

2. Composition de polymère styrénique selon la revendication 1, dans laquelle le polymère styrénique est l'un des suivants:
i) un polystyrène cristallin sous forme d'une mousse de polystyrène,
ii) une mousse de polystyrène expansé ou une mousse de polystyrène composée par extrusion,
iii) un HIPS, un ABS, un SAN ou un SMA.

3. Composition de polymère styrénique selon la revendication 1, dans laquelle l'agent ignifuge bromé est l'un des agents suivants:
i) un agent ignifuge bromé aliphatique,
ii) un agent choisi dans le groupe constitué par l'hexabromocyclododécane, l'éther de bis(2,3dibromopropyle) du tétrabromobisphénol A, le bromure de pentabromobenzyle, l'éther de bis(2,3-dibromo-2-méthylpropyle) du tétrabromobisphénol A, l'éther d'allyle et de tribromophénol, l'éther de bis(allyle) de tétrabromobisphénol A, la tris(2,3-dibromopropyl)triazine, le tétrabromobisphénol A et leurs combinaisons,
iii) un agent ayant un point de fusion inférieur à 300°C.

4. Composition de polymère styrénique selon la revendication 1, comprenant en outre l'un des constituants suivants:
i) un agent producteur de radicaux libres,
ii) un agent producteur de radicaux libres choisi dans le groupe constitué par le 2,3-diméthyl-2,3-diphénylbutane; la bis(α-phényléthyl)sulfone; le 1,1'-diphénylbicyclohexyle; le 2,2'-diméthyl-2,2'-azobutane; le 2,2'-dibromo-2,2'-azobutane; le 2,2'-dichloro-2,2'-azobutane; l'acide 2,2'-diméthyl-2,2'-azobutane-3,3',4,4'-tétracarboxylique; le 1,1'-diphénylbicyclopentyle; le peroxyde de dicumyle; le peroxyde de benzoyle et leurs combinaisons.

5. Composition de polymère styrénique selon la revendication 1, correspondant à l'une des propositions suivantes:
i) dans le mélange, le constituant (a) est présent en une quantité de 0,2 à 10,0 % en masse et le constituant (b) est présent en une quantité de 0,2 à 10 % en masse par rapport à la masse totale du mélange,
ii) le polymère styrénique est présent en une quantité de 80,0 à 99,6 % en masse et le mélange est présent en une quantité de 0,4 à 20 % en masse par rapport à la masse totale de la composition de polymère styrénique.

6. Mélange maître comprenant la composition de polymère styrénique de la revendication 1.

7. Composition de polymère styrénique selon la revendication 1, correspondant à l'une des propositions suivantes:
i) l'agent ignifuge bromé et l'agent ignifuge phosphoré sont compactés à sec et introduits dans le mélange sous forme de granulés,
ii) l'agent ignifuge bromé et l'agent ignifuge phosphoré sont mélangés, compactés à sec et introduits dans le mélange sous forme de granulés.

8. Composition de polymère styrénique selon la revendication 2, partie i), correspondant à l'une des propositions suivantes:
i) la mousse de polystyrène est préparée par polymérisation en suspension de styrène en présence du mélange,
ii) la mousse de polystyrène est une mousse de polystyrène extrudée (XPS) et/ou une mousse de polystyrène pouvant être expansée (EPS).

9. Article comprenant la composition de polymère styrénique de la revendication 1.

10. Article selon la revendication 9, correspondant à l'une des propositions suivantes:
i) l'article a une température de distorsion à chaud, mesurée selon la norme ASTM D2863-00, d'au moins 70°C,
ii) l'article a un indice LOI, mesuré selon la norme ASTM D-648-72 sous une charge de flexion de 18,5 kg/cm², d'au moins 24,
iii) l'article a été formé par mélangeage par extrusion et/ou moulage par injection,
iv) l'article est un article moulé.

11. Procédé de préparation de la composition de polymère styrénique de la revendication 1, comprenant la mise en contact, par exemple le mélangeage, du polymère styrénique, de l'au moins un agent ignifuge bromé (a) et de l'au moins un ester phosphate solide (b) dans un ordre ou une combinaison quelconques.

12. Composition de polymère styrénique ignifuge préparée par le procédé de la revendication 11.

13. Mousse de polystyrène comprenant la composition de polymère styrénique ignifuge de la revendication 12.

14. Procédé selon la revendication 11, dans lequel l'agent ignifuge bromé et l'agent ignifuge phosphoré correspondent à l'une des propositions suivantes:
i) ils sont compactés à sec et introduits dans le mélange sous forme de granulés,
ii) ils sont mélangés, compactés à sec et introduits dans le mélange sous forme de granulés.
